# EUROPEAN PATENT SPECIFICATION

(11) **EP 1 406 758 B1**
(45) Date of publication and mention of the grant of the patent: **02.09.2015**
(21) Application number: 02745609.4
(22) Date of filing: 12.07.2002
(51) Int. Cl.: B29C 65/02, B65D 65/46

(54) **PROCESS FOR HEAT SEALING A WATER SOLUBLE FILM IN THE PRESENCE OF WATER**
HEISSSIEGELVERFAHREN EINER WASSERLÖSLICHEN FOLIE IN DER ANWESENHEIT VON WASSER
PROCEDE DE THERMOSCELLAGE D'UN FILM HYDROSOLUBLE EN PRESENCE D'EAU

(30) Priority: 14.07.2001 GB 0117191
(43) Date of publication of application: 14.04.2004
(73) Proprietor: Reckitt Benckiser (UK) Limited, Slough, Berkshire SL1 3UH (GB)
(72) Inventor: DUFFIELD, Paul J., Reckitt Benckiser Co. Serv. Ltd, Hull HU8 7DS (GB)
(74) Representative: Bowers, Craig Malcolm
(86) International application number: PCT/GB2002/003189
(87) International publication number: WO 2003/008180

(56) References cited:
- WO-A-01/36290
- DATABASE WPI Section Ch, Week 197817 Derwent Publications Ltd., London, GB; Class A11, AN 1978-30769A XP002215201 & JP 53 026868 A (HAYASHIBARA BIOCHEMICAL LAB), 13 March 1978 (1978-03-13) -& CHEMICAL ABSTRACTS, vol. 89, no. 4, 24 July 1978 (1978-07-24) Columbus, Ohio, US; abstract no. 25653, XP002215205

## Description

The present invention relates to a process for heat sealing a water-soluble film to a water soluble member which is especially suitable for use, for example, in the preparation of water-soluble containers.

It is known to package chemical compositions, particularly those which may be of a hazardous or irritant nature, in water soluble films which are heat sealed together. Such containers can simply be added to water in order to dissolve or disperse the contents of the container into the water. For example, WO 89/12587 discloses a package which comprises an envelope of a water soluble material which comprises a flexible wall and a water-soluble heat seal. The package may contain an organic liquid comprising, for example, a pesticide, fungicide, insecticide or herbicide.

WO 92/17382 discloses a package containing an agrochemical comprising a first sheet of non-planar water-soluble or water-dispersible material and a second sheet of water-soluble or water-dispersible material superposed on the first sheet and sealed to it.

JP-A-53026868 discloses a process for heat sealing a water soluble film to a water soluble member wherein an aqueous composition (moist air) is applied to the surfaces of said film and said member before the surfaces are sealed together.

It is desirable for the seal between two water soluble components, such as two films, to be strong. A weak seal may fail easily. This may cause problems if the components, form a container which encases a composition which could disperse in the incorrect environment, such as in the box they are stored in before use. This could render the entire batch of containers unsuitable for use..

The present invention provides a process for heat sealing a water soluble film to a water soluble member, wherein an aqueous composition is applied by printing or painting the composition to at least one of the surfaces of said film and said member before said surfaces are heat sealed together, wherein the water soluble member is in the form of a film or sheet having a pocket therein, and the pocket is produced by injection moulding or blow moulding.

It has surprisingly been discovered that a heat seal formed by the process of the present invention is stronger than a heat seal formed under the same conditions but without the aqueous composition being applied prior to heat sealing. This is especially the case when the heat seal is in an anhydrous environment, for example because it does not contact an aqueous composition. It is therefore possible to carry out heat sealing at the same temperature as previously used, in which case the heat seal is stronger. It is also possible to reduce the heat sealing temperature, which may consequently allow for a greater throughput of heat sealed components since less time may be required in the heat sealing step. It may also facilitate the heat sealing of components for which a lower heat sealing temperature is desirable.

It has also surprisingly been found that the process of the present invention reduces the crystallinity of the heat seal, thus increasing the dissolution speed of the seal area.

In the process of the present invention, a modified version of a standard heat sealing process is used. Heat sealing is a well known technique and is discussed, for example, in WO 89/12587 and WO 92/17382 and in James L. Throne "Understanding Thermoforming" published by Carl Hanser Verlag, 1999. In such a process, a film is sealed to a member by placing the film and the member next to each other, applying heat to the side of the film which is not in contact with the member for a sufficient duration such that the surface of the film which is in contact with the member becomes tacky, and applying pressure to seal the film to the member. In order to carry out heat sealing, it is necessary that the film is sufficiently thin to conduct heat to the surface which is to be sealed. This places some practical limitation on the thickness and conductivity of the film. In the context of the present invention, a film is defined as having any thickness such that it can be heat sealed. Apart from this, it can have any other characteristics. For example it can be rigid or flexible. In general the film has a thickness of from 20 to 160µm, preferably from 40 to 100µm, more preferably from 55 to 80µm for PVOH. These thicknesses also apply for other polymers, although other thicknesses may also be used depending on the conductivity, plasticity and Tg of the film

The member may have any thickness, shape or form since its thickness is not limited by the requirement that it must be heat sealable. It may, for example, be rigid or flexible. It may, for example, have a thickness in the area of heat sealing of from 15µm to 30mm, preferably 30 µm to 25mm, more preferably 80µm to 20mm. Preferably, however, the member is also in the form of a film. If the member is in the form of a film, it may have the same thickness as the film to which it is heat sealed, or a different thickness. It may also be in the form of a three-dimensional moulding.

The member can be integral with the film before they are sealed together. For example the film and the member can be different parts of a single film which is heat sealed to itself.

The film and member may comprise any water soluble (which term is taken to include water dispersible) polymer which can be heat sealed. The film and the member may be made of the same or different polymers. Examples of water-soluble polymers are poly(vinyl alcohol) (PVOH), cellulose derivatives such as hydroxypropyl methyl cellulose (HPMC), gelatin, poly(vinylpyrrolidone), poly(acrylic acid) or an ester thereof or poly(maleic acid) or an ester thereof. Copolymers of any of these polymers may also be used.

An example of a preferred PVOH is ethoxylated PVOH. The PVOH may be partially or fully alcoholised or hydrolysed. For example it may be from 40 to 100%, preferably from 70 to 92%, more preferably about 88% or about 92%, alcoholised or hydrolysed. The degree of hydrolysis is known to influence the temperature at which the PVOH starts to dissolve in water. 88% hydrolysis corresponds to a PVOH soluble in cold (ie room temperature) water, whereas 92% hydrolysis corresponds to a PVOH soluble in warm water. A preferred PVOH which can be further processed, for example by forming into a film or by moulding such as injection moulding, is sold in the form of granules under the name CP1210T05 by Soltec Developpement SA of Paris, France. By choosing an appropriate polymer it is possible to ensure that the water-soluble polymer dissolves at a desired temperature. Thus the film and/or the member may be cold water (20°C) soluble, but may be insoluble in cold water and only become soluble in warm or hot water having a temperature of, for example, 30°C, 40°C, 50°C or even 60°C.

Advantageously the film and/or member may be substantially anhydrous, that is contain less than 5 wt% water, preferably less than 2 wt% water. We have found that such films and members are less liable to shrink on heating, for example during a thermoforming step.

Desirably the water-soluble film and/or member consist essentially of, or consist of, the water-soluble polymer composition. It is possible for suitable additives such as plasticisers, lubricants and colouring agents to be added. Components which modify the properties of the polymer may also be added. Plasticisers are generally used in an amount of up to 20 wt%, for example from 10 to 20 wt%. Lubricants are generally used in an amount of 0.5 to 5 wt%. The polymer is therefore generally used in an amount of from 75 to 84.5 wt%, based on the total amount of the moulding composition. Suitable plasticisers are, for example, pentaerythritols such as depentaerythritol, sorbitol, mannitol, glycerine and glycols such as glycerol, ethylene glycol and polyethylene glycol. Solids such as talc, stearic acid, magnesium stearate, silicon dioxide, zinc stearate or colloidal silica may be used as lubricants.

It is also possible to include one or more particulate solids in the moulding composition, especially if the member is injection moulded in order to accelerate the rate of dissolution of the member or film. Dissolution of the solid in water is sufficient to cause an acceleration in the break-up of the member or film, particularly if a gas is generated.

Examples of such solids are alkali and alkaline earth metal, such as sodium, potassium, magnesium and calcium, bicarbonate and carbonate, in conjunction with an acid. Suitable acids are, for example acidic substances having carboxylic or sulfonic acid groups or salts thereof. Examples are cinnamic, tartaric, mandelic, fumaric, maleic, malic, palmoic, citric and naphthalene disulfonic acids, as free acids or as their salts, for example with alkali or alkaline earth metals.

The aqueous composition used in the process of the present invention is applied to at least one of the surfaces of said film and member before said surfaces are heat sealed together. Preferably it is applied to both surfaces. If the aqueous composition is applied only to one surface, it is preferred that it is applied to the surface which is not heated. Thus, in this case, it is applied to the member since it is usually the film which is heated. This ensures that it is the colder or thicker part which is softened or made more deformable by the application of the aqueous composition. However, for commercial reasons, and in particular having regard to the necessary modification of existing heat sealing machines, it is still satisfactory to apply the aqueous composition to the film.

The composition can be applied only to the area which is to be heat sealed or over a smaller or larger area of the film and/or member.

The aqueous composition can be applied, by a roller or a transfer printing process, for example a photogravure, litho, flexo, silk screen or recess printing process or by an inkjet printer. A transfer printing process uses a template which may be, for example, engraved or contain a lithographic image. The aqueous composition is coated onto the printing plate surface. The excess composition may be removed, if appropriate, for example using a doctor blade. The plate is then placed on top of the target to transfer the aqueous composition to the target.

Preferably the temperature of the aqueous composition is from 4 to 60°C, more preferably 10 to 40°C, even more preferably from 15 to 30°C. Most preferably the temperature of the aqueous composition is about room temperature (21°C) for ease of handling.

The aqueous composition is one which, when applied to the water-soluble film or member, penetrates into the film or member thus increasing its plasticity. It may also render the film or member sticky or tacky, although this is not essential. The aqueous composition generally comprises at least 50% water, preferably at least 60% and more preferably at least 70%. Most preferably the aqueous composition is dehardened pure water, although it may contain minor amounts of impurities. For example, it may be tap water which has not necessarily undergone any purification, although it may, if desired, be purified by one or more techniques to remove heavy metals and complexing metals such as by reverse osmosis, ultra violet, magnetic or ozone treatment or by deionisation. The aqueous composition may, however, comprise other components such as a water soluble polymer. Suitable water soluble polymers are discussed above. Generally the water soluble polymer is the same as that constituting the water soluble film and/or member. The aqueous composition may also comprise components which increase the surface tension or ionic strength of the composition to control the penetration of the composition into the film or member. For example it may comprise a salt such as an alkali metal salt, for example, lithium or sodium chloride or sodium citrate. Such salts are generally used in an amount of less than 1 wt%, although they may be used in larger amounts. For example the aqueous composition may be in the form of a saturated solution of a salt. In the case of lithium chloride this amounts to about 25 wt% lithium chloride in water. An increase in the surface tension can also be achieved, for example, by the addition of a thickener or gelling agent. Again, such components are generally used in an amount of less than 1 wt%, although they may be used in larger amounts.

The aqueous composition is applied to the surface of the film and/or member before the film and the member are contacted prior to heat sealing. The film and the member may be contacted immediately after the aqueous composition is applied. Desirably, however, the aqueous composition is allowed to act on the water soluble film or member for a short while before the film and the member are contacted, for example from 0.5 to 10 seconds, preferably from 1 to 5 seconds, more preferably from 1.5 to 2.5 seconds.

The film and the member are then heat sealed together in a known manner. Thus the film and the member are held together by means of a pressure plate pushing down against the parts of the.combination which need to be heat sealed, for example in a direction towards the member. The plate may be flat or may have, for example, a textured surface such as stipples. Heat is generally applied to the side of the film which is opposite the side which is in contact to the member. Heat is generally applied to the film by a heating the pressure plate. However, it is also possible to use, for example, other heating means such as contact heaters or radial heaters. The sealing conditions depend on the machine and material used. Generally the sealing temperature is from 100 to 180°C. The pressure is usually from 100 to 500 kPa (1 to 5 bar). The dwell time is generally from 1.3 to 2.5 seconds.

The water soluble member is desirably in the form such that, when the film is sealed to it, there is provided a water-soluble container containing at least one composition. If the member is integral with the film before they are sealed together, and in the form of a single film which is heat sealed to itself, a vertical form fill sealing process can be carried out to provide envelopes containing a composition. Pillow packs can also be produced from two different films.

The member can also be in the form of a more rigid moulding. Such a moulding can be in the form of an open container which is filled with at least one composition and then sealed with at least one film by the process of the present invention. Such containers are desirable, for example, in WO 01/36,290.

For example the container may be a water-soluble, injection-moulded container comprising at least two compartments, a first compartment containing a first composition and having a first opening closed by a first film and a second compartment containing a second composition and having a second opening closed by a second film, wherein the first film and the second film have the same different water dissolution characteristics and neither, one or both dissolve before the walls of the container. One, some or all of the films may be heat sealed by the process of the present invention.

An injection moulded member forming a container has walls which generally have a thickness such that the container is rigid. For example, the outside walls and any inside walls may independently have a thickness of greater than 100µm, for example greater than 150µm or greater than 200µm, 300µm, 400µm, 500µm, 750µm or 1mm. Typically the thicknesses are from 200µm to 1,000µm, preferably 300µm to 500µm.

The container, may have any shape, but suitably is generally cuboid. The top wall may be formed by the sealing film and the side walls and base wall may be formed by the thermoformed or injection moulded part of the container, hereinafter sometimes referred to as the receptacle part.

The receptacle part may contain one or two or more compartments. For example it can contain 1, 2, 3, 4, 5 or 6 or more compartments. At least one or two, and preferable all, of the compartments have openings on the outside of the container. If there are more than one opening, the openings may independently be on any side of the container. Thus, for example, all of the openings may be on one side of the container. Alternatively, one side of the container may have one or more openings and at least one other side of the container may have one or more openings. For example, for a container with two openings, the openings may both be on the same or different sides of the container. If they are on different sides, the sides may be, for example, adjacent to or opposite each other. As a further example, for a container with three openings, the openings may all be on one side of the container, the openings may all be on different sides of the container, or the container may have one opening on one side and two openings on another side. These openings may be, for example, on adjacent or opposite sides of the container. As a yet further example, for a container with four openings, the openings may all be on one side of the container, the openings may all be on different sides of the container, or the container may have two openings on one side and two openings on another side, or the container may have two openings on one side and one opening on each of two other sides. These openings may be, for example, on adjacent or opposite sides of the container. Desirably, and especially when all of the openings are on one side of the container, the openings extend substantially across all of the face of the container except for that part of the face which is required as a surface for sealing the films to the container. Said part may be, for example, an inward or outward flange.

The dividing wall or walls of the container preferably terminate at the top of the receptacle part, i.e. in the same plane as the top edges of the side walls, such that when the receptacle part is closed by the sealing part the contents of the compartments cannot mix.

The container may be formed with an opening, for example a depression, formed in a side wall or in the base wall, and preferably being open in the outward direction. That is to say, it does not form part of the main volume defined by the container. Preferably the opening is adapted to receive, in a press-fit manner, a solid block, for example a tablet or ball, of a composition useful in a washing process. The opening may also receive a non-compressed composition, for example a gel, which is allowed to set in the opening. A composition held in such an opening may be released before the contents of the container are released.

If the water soluble member is formed by injection moulding, it may be injection moulded at any suitable temperature. A suitable moulding temperature, especially for PVOH, is from 180°C to 220°C, depending upon the formulation selected and the melt flow required. Each container may be individually moulded. It is also possible to mould the containers a conjoined line or a two dimensional array. The containers are then filled with the desired compositions. Before or after the filling step it is possible, if desired, to separate individual containers if more than one container has been moulded together. If the containers have more than one compartment, each compartment may be filled with a composition. The compositions in each compartment may be the same or different. Each compartment may be filled simultaneously or at different times. If all of the compartments have openings on the same side, the compartments may all be filled at the same time. However, if the compartments have openings on different sides, they may need to be filled at different times, with the orientation of the container being changed in between the filling operations. It may also be necessary to seal the opening of the filled compartment before the orientation of the container is changed. For example, in order to fill a container in the form of a cuboid consisting of two compartments separated by an internal wall and having openings on opposite sides, the container is initially positioned with one opening upperwards, the compartment with the uppermost opening is filled and the opening is then sealed with a first film. The container is then turned upside down, and the operation repeated to fill the other compartment with a composition and then seal it with a second film.

If all of the compartments have openings on the same side of the container one film or a plurality of films may be used to seal the openings. However, if a single film is used to seal all the openings, or if the same film is used to seal all the openings at different times, at least part of the film must be treated or otherwise modified in order to ensure that at least two compartments are sealed with films having different dissolution characteristics.
When at least two different films are used to seal different openings, the films may have different dissolution characteristics from each other at the time of sealing, or the characteristics may be modified after the compartments have been sealed.

In order to ensure that films have different dissolution characteristics, the films may be chosen to dissolve at different temperatures. For example, the films may comprise PVOH polymers having different degrees of hydrolysis. The films may also be chosen to dissolve at different pHs. It is also possible to ensure that the films take different times to dissolve to achieve a sequential release of compositions from different compartments, even when the external environment of the containers has not changed. This may be achieved, for example, by using films which are of the same or different composition but which are of different thicknesses. It is also possible to treat one or more of the films after they have sealed the openings. For example, one or more of the films may be covered by another film. If this is the same film it will simply retard dissolution of the film. If.is a different film, it may alter other dissolution properties. For example covering a cold water soluble film with a warm water soluble film will ensure that the resultant composite film will only dissolve in warm water.

If a single film is used, it is possible to treat at least part of the surface before or after it seals the openings of the container. Any of the above treatments may be used, alone or in combination.

The film and/or member in all embodiments of the present invention may be a single film, or a laminated film as disclosed in GB-A-2,244,258. While a single films may have pinholes, the two or more layers in a laminate are unlikely to have pinholes which coincide

The film may be produced by any process, for example by extrusion and blowing or by casting. The film may be unoriented, monoaxially oriented or biaxially oriented. If the layers in the film are oriented, they usually have the same orientation, although their planes of orientation may be different if desired.

The layers in a laminate may be the same or different. Thus they may each comprise the same polymer or a different polymer. If it is desired to have a water-soluble laminated film, each of the layers should be water-soluble.

The thickness of the film used to produce the pocket is preferably 40 to 300 µm, more preferably 80 to 200 µm, especially 100 to 160 µm, more especially 100 to 150 µm and most especially 120 to 150 µm.

After the pocket has been filled with the desired composition, a film is placed on top of the filled pocket and across the sealing portion, and the film are heat sealed together at the sealing portion by the process of the present invention. This film may be a single-layered film but is desirably laminated to reduce the possibility of pinholes allowing leakage through the film. The film may be the same or different as the film forming the pocket.

Desirably the covering film has a thickness which is less than that of the film used for forming a pocket because it would not generally be stretched so localised thinning of the sheet will not occur. It is also desirable to have a thickness which is less than that of the film used to form a pocket to ensure a sufficient heat transfer through the film to soften the base web because heat sealing is used.

The thickness of the covering film is generally from 20 to 160 µm, preferably from 40 to 100 µm, such as 40 to 80 µm or 50 to 60 µm.

The sealing films generally dissolve in water before the receptacle part of the container. The films therefore generally have thicknesses which are less than the wall thickness of the receptacle part. In general, the sealing part dissolves in water (at least to the extent of allowing the composition in the receptacle part to be partly or completely dissolved by the water) at 40°C in less than 5 minutes, preferably less than 2 minute.

It is possible for one or more of the sealing films to have incorporated therein a composition. Thus, for example, one or more of the films can themselves contain compositions formed in the films by a previous operation such as thermoforming or vertical form fill sealing.

If the containers contain two or more compositions, they can have a particularly attractive appearance since the compositions, which may be identical or different, may be held in a fixed position in relation to each other. The compositions can be easily differentiated to accentuate their difference. For example, the compositions can have a different physical appearance, or can be coloured differently.

Thus the composition within the container, or an individual compartment, need not be uniform. For example, during manufacture the container or compartment could first be fed with a settable composition, for example, a gel, and then with a different composition. The first composition could dissolve slowly in the washing process so as to deliver its charge over a long period within the washing process. This might be useful, for example, to provide an immediate, delayed or sustained delivery of an component such as a softening agent.

The compositions in each compartment may be the same or different. If they are different, they may, nevertheless, have one or more individual components in common.

The composition(s) which can be held in the container, or in each compartment of the container may independently be a fabric care, surface care or dishwashing composition. Thus, for example, they may be a dishwashing, water-softening, laundry or detergent composition, or a rinse aid. Such compositions may be suitable for use in a domestic washing machine. The compositions may also independently be a disinfectant, antibacterial or antiseptic composition, or a refill composition for a trigger-type spray. Such compositions are generally packaged in total amounts of from 5 to 100 g, especially from 15 to 40 g. For example, a laundry composition may weigh from 15 to 40g, a dishwashing composition may weigh from 15 to 30 g and a water-softening composition may weigh from 15 to 40 g.

The composition(s) may be a solid. For example, it may be a particulate or granulated solid, or a tablet. It may also be a liquid, which may be thickened or gelled if desired. The liquid composition may be non-aqueous (i.e. anhydrous) or aqueous, for example comprising less than or more than 5 wt% total or free water. An anhydrous composition generally contains less than 1 wt%, preferably less than 0.5 wt% water. The composition may have more than one phase. For example it may comprise an aqueous composition and a liquid composition which is immiscible with the aqueous composition. It may also comprise a liquid composition and a separate solid composition, for example in the form of a ball, or pill or speckles. The liquid composition may be thickened or gelled.

If the composition is an aqueous liquid having a relatively high water content, for example above 5 wt% water, it may be necessary to take steps to ensure that the liquid does not attack the water-soluble polymer if it is soluble in cold water, or water up to a temperature of, say, 35°C. Steps may be taken to treat the inside surfaces of the container, for example by coating it with agents such as PVdC (poly(vinylidene dichloride)) or PTFE (polytetrafluoroethylene), or to adapt the composition to ensure it does not dissolve the polymer. For example, it has been found that ensuring the composition has a high ionic strength or contains an agent which minimises water loss through the walls of the container will prevent the composition form dissolving the polymer from the inside. This is described in more detail in EP-A-518,689 and WO 97/27,743.

The containers may have any desired shape. For example the container can have a irregular or regular geometrical shape such as a cube, cuboid, pyramid, dodecahedron or cylinder. The cylinder may have any desired cross-section, such as a circular, triangular or square cross-section.

If the container has two or more compartments, the individual compartments need not necessarily be regular or identical. For example, if the final container has a cuboid shape, the individual compartments may have different sizes to accommodate different quantities of compositions.

The compartments may have the same or different size and/or shape. In general, if it is desired to have compartments containing different quantities of components, the compartments have volume ratios of from 2:1 to 20:1, especially from 4:1 to 10:1.

The container may also have a hook portion so that it can be hung, for example, from an appropriate place inside a dishwashing machine.

The containers produced by the process of the present invention may, if desired, have a maximum dimension of 5 cm, excluding any flanges. For example, a container may have a length of 1 to 5 cm, especially 3.5 to 4.5 cm, a width of 1.5 to 3.5 cm, especially 2 to 3 cm, and a height of 1 to 2 cm, especially 1.25 to 1.75 cm.

If more than one composition is present, the compositions may be appropriately chosen depending on the desired use of the article.

If the article is for use in laundry washing, the primary composition may comprise, for example, a detergent, and the secondary composition may comprise a bleach, stain remover, water-softener, enzyme or fabric conditioner. The article is adapted to release the compositions at different times during the laundry wash. For example, a bleach or fabric conditioner is generally released at the end of a wash, and a water-softener is generally released at the start of a wash. An enzyme may be released at the start or the end of a wash.

If the article is for use as a fabric conditioner, the primary composition may comprise a fabric conditioner and the secondary component may comprise an enzyme which is released before or after the fabric conditioner in a rinse cycle.

If the article is for use in dish washing the primary composition may comprise a detergent and the secondary composition may comprise a water-softener, salt, enzyme, rinse aid, bleach or bleach activator. The article is adapted to release the compositions at different times during the laundry wash. For example, a rinse aid, bleach or bleach activator is generally released at the end of a wash, and a water-softener, salt or enzyme is generally released at the start of a wash.

Examples of surface care compositions are those used in the field of surface care, for example to clean, treat or polish a surface. Suitable surfaces are, for example, household surfaces such as worktops, as well as surfaces of sanitary ware, such as sinks, basins and lavatories.
The ingredients of each composition depend on the use of the composition. Thus, for example, the composition may contain surface active agents such as an anionic, □on-ionic, cationic, amphoteric or zwitterionic surface active agents or mixtures thereof.

Examples of anionic surfactants are straight-chained or branched alkyl sulfates and alkyl polyalkoxylated sulfates, also known as alkyl ether sulfates. Such surfactants may be produced by the sulfation of higher C₈-C₂₀ fatty alcohols. Examples of primary alkyl sulfate surfactants are those of formula:

ROSO₃⁻M⁺

wherein R is a linear C₈-C₂₀ hydrocarbyl group and M is a water-solubilising cation. Preferably R is C₁₀-C₁₆ alkyl, for example C₁₂-C₁₄, and M is alkali metal such as lithium, sodium or potassium.

Examples of secondary alkyl sulfate surfactants are those which have the sulfate moiety on a "backbone" of the molecule, for example those of formula:

CH₂ (CH₂)ₙ (CHOSO₃⁻M⁺) (CH₂)ₘCH₃

wherein m and n are independently 2 or more, the sum of m+n typically being 6 to 20, for example 9 to 15, and M is a water-solubilising cation such as lithium, sodium or potassium.

Especially preferred secondary alkyl sulfates are the (2,3) alkyl sulfate surfactants of formulae:

CH₂(CH₂)ₓ(CHOSO₃⁻M⁺)CH₃ and

CH₃ (CH₂)ₓ(CHOSO₃⁻M⁺)CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.
Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium or potassium salts, and alkyl, for example C₈-C₁₈, benzene sulfonates.

Examples of non-ionic surfactants are fatty acid alkoxylates, such as fatty acid ethoxylates, especially those of formula:

R(C₂H₄O)ₙOH

wherein R is a straight or branched C₈-C₁₆ alkyl group, preferably a C₉-C₁₅, for example C₁₀-C₁₄, alkyl group and n is at least 1, for example from 1 to 16, preferably 2 to 12, more preferably 3 to 10.

The alkoxylated fatty alcohol □on-ionic surfactant will frequently have a hydrophilic-lipophilic balance (HLB) which ranges from 3 to 17, more preferably from 6 to 15, most preferably from 10 to 15.

Examples of fatty alcohol ethoxylates are those made from alcohols of 12 to 15 carbon atoms and which contain about 7 moles of ethylene oxide. Such materials are commercially marketed under the trademarks Neodol 25-7 and Neodol 23-6.5 by Shell Chemical Company. Other useful Neodols include Neodol 1-5, an ethoxylated fatty alcohol averaging 11 carbon atoms in its alkyl chain with about 5 moles of ethylene oxide; Neodol 23-9, an ethoxylated primary C₁₂-C₁₃ alcohol having about 9 moles of ethylene oxide; and Neodol 91-10, an ethoxylated C₉-C₁₁ primary alcohol having about 10 moles of ethylene oxide.

Alcohol ethoxylates of this type have also been marketed by Shell Chemical Company under the Dobanol trademark. Dobanol 91-5 is an ethoxylated C₉-C₁₁ fatty alcohol with an average of 5 moles ethylene oxide and Dobanol 25-7 is an ethoxylated C₁₂-C₁₅ fatty alcohol with an average of 7 moles of ethylene oxide per mole of fatty alcohol.

Other examples of suitable ethoxylated alcohol □on-ionic surfactants include Tergitol 15-S-7 and Tergitol 15-S-9, both of which are linear secondary alcohol ethoxylates available from Union Carbide Corporation. Tergitol 15-S-7 is a mixed ethoxylated product of a C₁₁-C₁₅ linear secondary alkanol with 7 moles of ethylene oxide and Tergitol 15-S-9 is the same but with 9 moles of ethylene oxide.

Other suitable alcohol ethoxylated □on-ionic surfactants are Neodol 45-11, which is a similar ethylene oxide condensation products of a fatty alcohol having 14-15 carbon atoms and the number of ethylene oxide groups per mole being about 11. Such products are also available from Shell Chemical Company.

Further non-ionic surfactants are, for example, C₁₀-C₁₈ alkyl polyglycosides, such s C₁₂-C₁₆ alkyl polyglycosides, especially the polyglucosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

The total content of surfactants in the composition is desirably 60 to 95 wt%, especially 75 to 90 wt%. Desirably an anionic surfactant is present in an amount of 50 to 75 wt%, the Don-ionic surfactant is present in an amount of 5 to 20 wt%, and/or the cationic surfactant is present in an amount of from 0 to 20 wt%. The amounts are based on the total solids content of the composition, i.e. excluding any solvent which may be present.

The composition, particularly when used as laundry washing or dishwashing composition, may also comprise enzymes, such as protease, lipase, amylase, cellulase and peroxidase enzymes. Such enzymes are commercially available and sold, for example, under the registered trade marks Esperesc, Alcalasc and Savinasc by Nova Industries A/S and Maxatasc by International Biosynthetics, Inc. Desirably the enzymes are present in the composition in an amount of from 0.5 to 3 wt%, especially 1 to 2 wt%.

The composition may, if desired, comprise a thickening agent or gelling agent. Suitable thickeners are polyacrylate polymers such as those sold under the trade mark CARBOPOL, or the trade mark ACUSOL by Rohm and Hass Company. Other suitable thickeners are xanthan gums. The thickener, if present, is generally present in an amount of from 0.2 to 4 wt%, especially 0.5 to 2 wt%.

Dishwasher compositions usually comprise a detergency builder. Suitable builders are alkali metal or ammonium phosphates, polyphosphates, phosphonates, polyphosphonates, carbonates, bicarbonates, borates, polyhydroxysulfonates, polyacetates, carboxylates such as citrates, and polycarboxylates. The builder is desirably present in an amount of up to 90 wt%, preferably 15 to 90 wt%, more preferable 15 to 75 wt%, relative to the total weight of the composition. Further details of suitable components are given in, for example, EP-A-694,059, EP-A-518,720 and WO 99/06522.

The compositions can also optionally comprise one or more additional ingredients. These include conventional detergent composition components such as further surfactants, bleaches, bleach enhancing agents, builders, suds boosters or suds suppressors, anti-tarnish and anticorrosion agents, organic solvents, co-solvents, phase stabilisers, emulsifying agents, preservatives, soil suspending agents, soil release agents, germicides, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute no more than 10 wt%, for example from 1 to 6 wt%, the total weight of the compositions.

The builders counteract the effects of calcium, or other ion, water hardness encountered during laundering or bleaching use of the compositions herein. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark Dequest and alkylhydroxy phosphonates. Citrate salts and C₁₂-C₁₈ fatty acid soaps are preferred.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark Sokalan.
The builders generally constitute from 0 to 3 wt%, more preferably from 0.1 to 1 wt%, by weight of the compositions. Compositions which comprise an enzyme may optionally contain materials which maintain the stability of the enzyme. Such enzyme stabilizers include, for example, polyols such as propylene glycol, boric acid and borax. Combinations of these enzyme stabilizers may also be employed. If utilized, the enzyme stabilizers generally constitute from 0.1 to 1 wt% of the compositions.

The compositions may optionally comprise materials which serve as phase stabilizers and/or co-solvents. Example are C₁-C₃ alcohols such as methanol, ethanol and propanol. C₁-C₃ alkanolamines such as mono-, di- and triethanolamines can also be used, by themselves or in combination with the alcohols. The phase stabilizers and/or co-solvents can, for example, constitute 0 to 1 wt%, preferably 0.1 to 0.5 wt%, of the composition.

The compositions may optionally comprise components which adjust or maintain the pH of the compositions at optimum levels. The pH may be from, for example, 1 to 13, such as 8 to 11 depending on the nature of the composition. For example a dishwashing composition desirably has a pH of 8 to 11, a laundry composition desirable has a pH of 7 to 9, and a water-softening composition desirably has a pH of 7 to 9. Examples of pH adjusting agents are NaOH and citric acid.

The containers may themselves be packaged in outer containers if desired, for example non-water soluble containers which are removed before the water-soluble containers are used.

In use the container are simply added to water where the dissolve. Thus they may be added in the usual way to a dishwasher or laundry machine, especially in the dishwashing compartment or a drum. They may also be added to a quantity of water, for example in a bucket or trigger-type spray.

### EXAMPLES

The present invention is now further illustrated in the following Examples.

### Example 1

Heat sealed packages were produced using a Tiromat Powerpack machine which had been modified for use with PVOH film.

A base web of anhydrous (water content of about 0.5%) PVOH (Grade L712D obtained from Aquafilm ltd, UK) having a thickness of 120µm was thermoformed to produce pockets under conditions of 118°C and 101kPa (1 atmosphere) pressure. The pockets were then filled with a liquid laundry detergency composition.

A PVOH lidding film (Solublon PT60 obtained from Aicello, Japan) having a thickness of 60µm was applied and heat sealed to the base web under conditions of 166°C, 2.5 seconds dwell time and 500kPa (5 bar) pressure.

The seal strength was determined using a Hounsfield compression tester running at 1mm/min. The seal strength was found to be 0.85 kgf.

The above experiment was repeated except for the addition of a water coating step. After the containers were filled with the detergent composition, the bottom web was coated with dehardened water. A foam roller such as those used in home decorating was dipped in water at 21°C and the excess removed. The roller was then run along the bottom web three times before applying and sealing the lidding film. The seal strength was then determined by the method defined above, and was found to be 58 kgf.

### Example 2

Example 1 was repeated except that the PVOH lidding film was M8630 obtained from Chris Craft having a thickness of 76µm and the heat sealing was carried out at a temperature of 155°C. The seal strength was found to be 30 kgf, and the seal has an opaque appearance indicating crystallinity and consequently poor water solubility

This experiment was repeated except that water was applied following the procedure of Example 1, and the heat sealing was carried out at a temperature of 100°C. The seal strength was found to be unchanged at 30 kgf, and the seal had a clear appearance indicating a lack of crystallinity and consequently good water solubility. The seal was also found to be softer to the touch, which again indicates a lack of crystallinity.

## Claims

1. A process for heat sealing a water soluble film to a water soluble member, wherein an aqueous composition is applied by printing or painting the composition to at least one of the surfaces of said film and said member before said surfaces are heat sealed together, wherein the water soluble member is in the form of a film or sheet having a pocket therein, and the pocket is produced by injection moulding or blow moulding.

2. A process according to claim 1 wherein the water soluble film is a poly (vinyl alcohol) film.

3. A process according to claim 1 or 2 wherein the water soluble member is a poly (vinyl alcohol) member.

4. A process according to claim 2 or 3 wherein poly (vinyl alcohol) in the water soluble film and/or the water soluble member has a water content of less than 5 wt%.

5. A process according to any one of the preceding claims wherein the aqueous composition is water.

6. A process according to any one of claims 1 to 4 wherein the aqueous composition is an aqueous solution of the polymer from which the water soluble film and/or water soluble member is made.

7. A process according to any one of the preceding claims wherein the aqueous composition is applied to the surfaces of both said water soluble film and said water soluble member.

8. A process according to any one of the preceding claims wherein the aqueous composition is applied by a transfer printing process.

9. A process according to claims 8 wherein the aqueous composition is applied by photogravure, litho, flexo, silk screen or recess printing process.

10. A process according to any one of the preceding claims wherein the aqueous composition has a temperature of from to 10 to 40°C.

11. A process according to any one of the preceding claims wherein the heat sealing pressure is from 100 to 500 kPa (1 to 5 bar).

12. A process according to any one of the preceding claims wherein the heat sealing temperature is from 100 to 180°C.

## Patentansprüche

1. Verfahren zum Heißsiegeln eines wasserlöslichen Films auf ein wasserlösliches Element, bei dem man eine wässrige Zusammensetzung aufbringt, indem man die Zusammensetzung auf mindestens eine der Oberflächen des Films und des Elements aufdruckt oder aufstreicht, bevor man die Oberflächen miteinander heißsiegelt, wobei das wasserlösliche Element in Form eines Films oder einer Folie mit einer Tasche darin vorliegt und die Tasche durch Spritzgießen oder Blasformen hergestellt wird.

2. Verfahren nach Anspruch 1, bei dem es sich bei dem wasserlöslichen Film um einen Poly(vinylalkohol)-Film handelt.

3. Verfahren nach Anspruch 1 oder 2, bei dem es sich bei dem wasserlöslichen Element um ein Poly(vinylalkohol)-Element handelt.

4. Verfahren nach Anspruch 2 oder 3, bei dem der Poly(vinylalkohol) in dem wasserlöslichen Film und/oder dem wasserlöslichen Element einen Wassergehalt von weniger als 5 Gew.-% aufweist.

5. Verfahren nach einem der vorhergehenden Ansprüche, bei dem es sich bei der wässrigen Zusammensetzung um Wasser handelt.

6. Verfahren nach einem der Ansprüche 1 bis 4, bei dem es sich bei der wässrigen Zusammensetzung um eine wässrige Lösung des Polymers, aus dem der wasserlösliche Film und/oder das wasserlösliche Element gefertigt sind, handelt.

7. Verfahren nach einem der vorhergehenden Ansprüche, bei dem man die wässrige Zusammensetzung auf die Oberflächen sowohl des wasserlöslichen Films als auch des wasserlöslichen Elements aufbringt.

8. Verfahren nach einem der vorhergehenden Ansprüche, bei dem man die wässrige Zusammensetzung durch ein Transferdruckverfahren aufbringt.

9. Verfahren nach Anspruch 8, bei dem man die wässrige Zusammensetzung durch ein Rastertiefdruck-, Lithodruck-, Flexodruck-, Siebdruck- oder Stichtiefdruckverfahren aufbringt.

10. Verfahren nach einem der vorhergehenden Ansprüche, bei dem die wässrige Zusammensetzung eine Temperatur von 10 bis 40°C aufweist.

11. Verfahren nach einem der vorhergehenden Ansprüche, bei dem der Heißsiegeldruck 100 bis 500 kPa (1 bis 5 bar) beträgt.

12. Verfahren nach einem der vorhergehenden Ansprüche, bei dem die Heißsiegeltemperatur 100 bis 180°C beträgt.

## Revendications

1. Procédé de thermoscellage d'un film hydrosoluble sur un élément hydrosoluble, dans lequel une composition aqueuse est appliquée en imprimant ou en peignant la composition sur au moins une des surfaces dudit film et dudit élément avant que lesdites surfaces soient thermoscellées ensemble, l'élément hydrosoluble se présentant sous la forme d'un film ou d'une feuille ayant une poche à l'intérieur, et la poche étant produite par moulage par injection ou moulage par soufflage.

2. Procédé selon la revendication 1 dans lequel le film hydrosoluble est un film de poly(alcool vinylique).

3. Procédé selon la revendication 1 ou 2 dans lequel l'élément hydrosoluble est un élément en poly(alcool vinylique).

4. Procédé selon la revendication 2 ou 3 dans lequel le poly(alcool vinylique) dans le film hydrosoluble et/ou l'élément hydrosoluble a une teneur en eau de moins de 5 % en poids.

5. Procédé selon l'une quelconque des revendications précédentes dans lequel la composition aqueuse est de l'eau.

6. Procédé selon l'une quelconque des revendications 1 à 4 dans lequel la composition aqueuse est une solution aqueuse du polymère à partir duquel le film hydrosoluble et/ou l'élément hydrosoluble sont fabriqués.

7. Procédé selon l'une quelconque des revendications précédentes dans lequel la composition aqueuse est appliquée aux surfaces à la fois dudit film hydrosoluble et dudit élément hydrosoluble.

8. Procédé selon l'une quelconque des revendications précédentes dans lequel la composition aqueuse est appliquée par un procédé d'impression par transfert.

9. Procédé selon la revendication 8 dans lequel la composition aqueuse est appliquée par un procédé de photogravure, lithographie, flexographie, sérigraphie ou impression en creux.

10. Procédé selon l'une quelconque des revendications précédentes dans lequel la composition aqueuse a une température de 10 à 40 °C.

11. Procédé selon l'une quelconque des revendications précédentes dans lequel la pression de thermoscellage est de 100 à 500 kPa (1 à 5 bar).

12. Procédé selon l'une quelconque des revendications précédentes dans lequel la température de thermoscellage est de 100 à 180 °C.
